# EUROPEAN PATENT APPLICATION

(11) **EP 1 816 595 A1**
(43) Date of publication of application: **08.08.2007**
(21) Application number: 06075254.0
(22) Date of filing: 06.02.2006
(51) Int. Cl.: G06Q 30/00

(54) **A method and a system for identifying potentially fraudulent customers in relation to network based commerce activities, in particular involving payment, and a computer program for performing said method**

(71) Applicant: MediaKey Ltd., Road Town, Tortola, B.V.I. (BS)
(72) Inventor: Thomsen, Jacob, 1101 Copenhagen (DK); Flemming Eldon, Per, 4300 Holbaek (DK); Bentsen, Nicolai, 2200 Copenhagen N (DK)
(74) Representative: Elmeros, Claus

(57) **Abstract**

The invention concerns a computer-implemented method, system and computer program for performing said method, for identifying potentially fraudulent customers in relation to network based commerce activities, in particular payment, associated with at least one client website 450. Said method comprises the following steps: providing information at least concerning said customers behaviour over time in relation to said at least one website 450 by tracking at least one customer induced event 120; and determining said at least one fraud risk potential 180 based on said information in order to identify potentially fraudulent customers. Accordingly, in a unique way, by the provision of website technology, behaviour analysis may be used to track customer behaviour on or in relation to a website, i.e. mathematical analysis may be utilized to process data concerning events, which are recordable. This provides the possibility of indicating fraud during the entire sales process, not merely in direct relation to the payment act, as provided with known fraud detection systems and methods. Examples of customer induced events are customer reactions on the website when being involved in the sale, e.g. the customer is clicking and selecting a certain product item in order to purchase it, or is entering customer data for the transaction, or is moving around between different pages on the merchant website, or is reluctant to enter data or to move around between pages. Further, it is no longer necessary to provide accurate transaction details, such as correct credit card number, or personal customer information, which are to be kept confidential and which are to be validated e.g. against databases containing stolen credit card numbers, in order to provide accurate and timely fraud indication.

## Description

The present invention relates to a method, a system and a computer program for performing said method, for identifying potentially fraudulent customers in relation to network based commerce activities, in particular involving payment.

Network based commerce activities, which term comprises sales, in particular involving payment, of products or services between consumers or customers and merchants performed through a network, such as the Internet, by the use of e.g. personal computers, Personal Digital Assistants or PDA's, or mobile phones, have gained substantial popularity and prominence in the global economy. The resulting gain and corresponding losses due to fraud encountered in particular in the completion of these payments, i.e. during the completion of the funds transaction, have been increasing. Accordingly, several attempts have been made to conceive methods and systems for reducing or at least detecting payments by fraudulent customers, before these are completed.

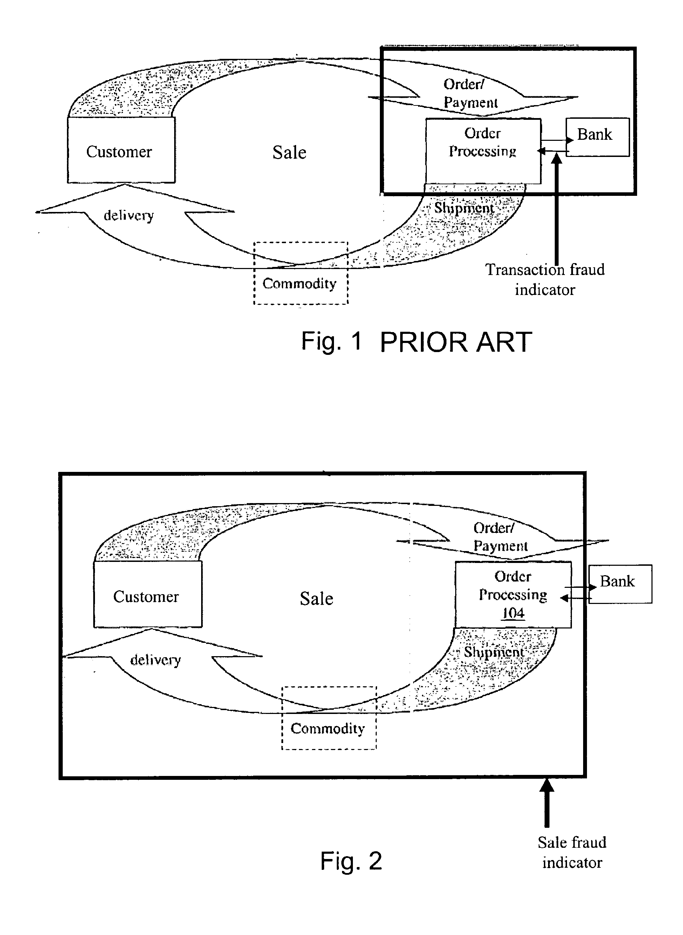

The commerce activities in a sale, also a network performed sale, see fig. 1, comprises the collection of activities in relation to consummating the sale, e.g. the merchant displays product/service for sale, entry of a customer, the customer selects the product/service to be provided and request to purchase it, the customer agrees to price and terms of sale, payment is performed, the customer acquires product/service and exits. Network performed sales may further include activities relating to the sale such as the customer contacting the merchant by e-mail or phone, the merchant contacting the customer to confirm sale, and other sales related activities.

The term "transaction" comprises the activity of completing the payment made on the network, e.g. validating a payment using e.g. a credit card or by transferral of a payment from one bank account to another.

In a direct sale a consumer or customer enters a merchant's website in order to purchase goods and/or services. During said sale, the consumer generally provides information concerning him/herself and mode of payment, e.g. using a credit card by entering its number in order to pay for the products/services being offered on said site. The merchant submits the charge to the credit card company and deletes the transaction with the consumer once the credit card company authorizes the charge, in a straight-through type processing.

If the consumer refutes or disputes the charge, claiming he has not ordered the purchase or authorized the transaction, a charge-back occurs on the consumers credit card account, and payment to the merchant is reversed. Not only does the merchant lose a sale, he must also absorb the cost of the non-completed transaction. He is fined every time a charge-back occurs with one of his customers, and if his charge-back percentage of his total sale exceeds a small value, he may be charged with large fines, and ultimately be relieved of his merchant account. The same is true in case of fraudulent transactions, e.g. where the customer appearing on the website is not the owner of the credit card used for payment.

Many products and services are available for sale in a network, such as the Internet, examples of products being SMS-messages or call time available for mobile phones, mail order gifts, ware house items, and of services being hotel or travel bookings, and examples of network based services being long distance performed server updates, downloads of music, movies and other entertainment, and the like. In particular when providing services on the Internet the consummation of the sale with a low risk of fraud is essential to the merchant providing such network based service.

At present, there are many existing systems for detecting fraud in relation to the payments *per se,* where data directly relating to any one payment, e.g. amount, customer and his history, number of items etc, is analyzed according to numerous rules based on different variables. For example a simple fraud detection scheme could analyze a transaction using two rules only, e.g. "if more than X number of orders have been placed within the last Y hours" and "if the total value of the present order is over Z dollars", then the transaction should be considered fraudulent. The indicator values of X, Y and Z would then be set according to the history of frauds encountered. The first rule, i.e. "more than X numbers of orders have been placed within the last Y hours" is combined with the second rule, i.e. "the total value of the present order is above Z dollars" into a rule set. A rule or rule set may be said to include criteria such as "more than", or "value of ... is above" applied to events such as "X number of order placed within last Y hours". The rule set is the applied to the selected variables encountered during a transaction in order to determined whether the transaction is potentially fraudulent. Some analyzing tools apply weights to each such event in order to rank these events in order of their importance for the combined result of the two or more events.

In United States patent application US 2003/069820 transaction parameters, such as customer name, address, check account number, prior events of fraud in connection to said account or individual, etc. are analyzed and characteristics are identified in order to provide an indication as to whether the transaction is fraudulent. This system breaks down the transaction into a number of select component data parameters and single variable relationships. Points are assigned to each parameter/relationship based on the information, it represents, and whether it matches with known data. If the sum of points or fraud score exceeds a certain threshold, potential fraud is indicated and the transaction in question is not validated.

In European patent EP 0 669 032 is described a fraud detection system utilizing a complex predictive model in the form of a neural network, which performs self-learning of relationships among variables based on historical transaction data. The system uses the complex model to analyze a transaction and predict whether or not a transaction is potentially fraudulent. Such model is able to automatically correlate relationships among all of the parameters of the transaction to each other, and not just the single variable relationships of the above mentioned detection system. However, such self-learning based systems are complex to structure, difficult to develop, and require significant training and maintenance to maintain accuracy and to understand the results from properly.

The known fraud indication methods and systems, including the ones mentioned above, are applied around a point in time, which lies in direct connection with a specific payment, i.e. in direct relation to the transaction to be completed, see fig. 1, indicated by a black box, e.g. when requesting/receiving a validation check for the transaction. Accordingly, they are applied and used for a limited time before and during the transaction in question, i.e. many calculations and checks are to be performed within a relatively short time period. It is not expedient to provide a fraud determination in direct relation to the transaction in question, because this increases the time period needed for a transaction approval, which may put a strain on non-fraudulent customer patience, is not effective in a web-based environment e.g. for providing the above mentioned web-based services, as well as increases the risk of providing an erroneous positive or negative fraud indication.

Information concerning possible fraudulent individuals and/or payments is thus simply not available to a merchant in the case where a sale has not been consummated, e.g. when the customer is leaving the website without completing the payment.

Also, a problem of prior art systems have been to decide on and thus limit them to a fixed rule set in order to apply an optimal strategy and apply them in due time to either stop or at least delay a fraudulent transaction in order to reduce the resulting losses from such transactions.

In this light, it is an object of the present invention to provide a computer-implemented system and a method, and a computer program for performing said method, for identifying potentially fraudulent customers in relation to network based commerce activities, such as sales, in particular involving payments, e.g. a website on the Internet or in a wireless network offering a direct sale involving payment, which system, method, and computer program alleviates the above mentioned disadvantages provided by known systems, and which is able to determine a reliable fraud risk potential, irrespective of whether or not a sale has been consummated or a transaction completed.

This object is achieved according to the invention by a computer-implemented method and system, and computer program for performing said method, for identifying potentially fraudulent customers in relation to network based commerce activities, in particular involving payments, associated with at least one client website, said method comprising the following steps: providing information at least concerning said customers behaviour over time in relation to said at least one website by tracking at least one customer induced event; and determining at least one fraud risk potential based on said information in order to identify potentially fraudulent customers.

Accordingly, in a unique way, by the provision of website technology, behaviour analysis may be used to track customer behaviour on or in relation to a website, i.e. mathematical analysis may be utilized to process data concerning events, which are recordable. This provides the possibility of indicating fraud during the entire sales process, not merely in direct relation to the payment act, as is provided with known fraud detection systems and methods. Examples of customer induced events are customer reactions on the website when being involved in the sale, e.g. the customer is clicking and selecting a certain product item in order to purchase it, or is entering customer data for the transaction, or is moving around between different pages on the merchant website, or is reluctant to enter data or to move around between pages.

Hereby, an alternative or supplement to existing payment or sale fraud detection methods and systems is provided, which allows a merchant to keep track of the behaviour of individual consumers on a website, which may again directly reflect the possibility of these for committing fraudulent transactions over time.

Further, it is no longer necessary or it is at least optional to analyze the transaction process for a confirmed website sale in order to determine the possibility of fraudulent customer transactions. Based on a client and/or system provider determined selection of customer events to be tracked by said system and method, a reliable fraud risk potential is determined, which leads to a reliable identification of fraudulent website customers.

Further, it is no longer necessary in order to provide accurate and timely fraud indication to provide both accurate and sensitive transaction details, such as correct credit card number, or personal customer information, which are to be kept confidential and which are to be validated e.g. against databases containing stolen credit card numbers. Such details may obviously optionally also be provided, however, it is not necessary for sensitive personal or financial data to be entered by a customer for the fraud tracking to effectively indicate a positive fraud situation. Further, the provision of inaccurate data may be tracked and indicated by the inventive system and method.

One or more websites may be surveyed simultaneously by the method and system according to the invention in ways known to the skilled person, e.g. when a merchant is providing more than one site, or if the fraud indication system is provided by a fraud system provider externally from said merchant. The fraud system provider is thus able to concurrently scan and survey several websites from different merchants subscribing to such service. Further, the merchant or system provider is provided the opportunity to correlate information between the websites being surveyed.

A computer program for performing the method according to the invention is provided according to claim 39. Preferably, said program is installable partly in relation to the merchant's website, partly in relation to the fraud indication service providers website. A default rule set, and code for including the above mentioned other embodiments of the method and system according to the invention may also be provided in code, said computer program being executable e.g. from the merchant's server or web server. Thus, the computer implemented method and system is able to be installed and run from a client's or fraud system provider's computer systems or servers, such as preferably web servers on a website for providing fraud indications.

In a preferred embodiment of the method according to the invention, said at least one fraud risk potential is determined substantially continually and at least after each customer induced event in relation to said at least one website, thereby providing at least one substantially time variable continuous fraud risk potential. Accordingly, a fraud risk potential is provided continuously and for every stage of the customer sales activity on the website, which increases the reliability of the fraud risk potential determined. Thus, the fraud indication is not based on a transaction being performed nor depending upon said transaction being completed. This is a major advantage, because fraud may thus be determined even without a payment being performed. Further, it is possible not only to indicate fraud risk in connection with a transaction, but also to indicate fraud risk in connection with the customer or/and the payment and/or the service/product delivery in question.

Alternatively, in another embodiment of the method according to the invention said at least one fraud risk potential is determined intermittently after tracking said at least one customer induced event in relation to said at least one website, thereby providing at least one substantially time variable intermittent fraud risk potential. Thereby, the fraudulent customer may be identified at predetermined points in time, based on batches of tracked events and other information, such as before and/or after a transaction is being authorized. This reduces the need for continuous communication between the website part and the analyzing part of the system.

In two further embodiments of the method according to the invention said at least one fraud risk potential is determined at least right before and/or right after a transaction for a payment is authorized. Accordingly, a fraud risk potential is determined for an identification of a fraudulent customer before the transaction is authorized, i.e. there is a reduced risk of a charge-back occurring due to fraud. When performing the determination after the transaction authorisation, the client such as a merchant and/or a payment provider may be provided with an indication as to the likelihood of a charge-back being experienced with the transaction, in which case data concerning the fraud risk and the transaction may be supplied to the merchant for a decision of whether to ship or perform the ordered product or serve, respectively.

In one embodiment of the method according to the invention, said information further comprises environment induced events, comprising system and/or calendar induced events. Thus, the stability of the method and system is increased, and the reliability of the determined fraud risk potential is increased, based on further information concerning system induced events, e.g. system down times, system maintenance periods, system updates, etc, and calendar induced events, e.g. the determination of the fraud risk potential is able to distinguish fraud related sale during a low season, e.g. near the end of the month, and during a high season, e.g. the days before Christmas, the days after Thanksgiving in the US, during a promotional week etc, because the number of items being bought would vary substantially accordingly, and such natural variation would not indicate any type of fraud.

In another embodiment of the method according to the invention, said information further comprises data concerning the payment, comprising transaction data and/or customer data. Thus, the reliability of the determined fraud risk potential is further increased, based on such information, which transaction data may comprise customer, client and/or fraud system provider input data, e.g. comprising credit card details, customer transaction history data, and transaction type data, respectively. Such data concerning the payment is optional.

In a further embodiment of the method according to the invention, the step of determining comprises applying a timeline sequence analysis onto said information. Accordingly, the customer induced events being tracked and other information, provided from or in relation to the sale, may be applied during determination in such a way, that a reliable fraud risk potential is derivable, which is not dependent upon a high number of tracked events being recorded. Further, the extent and focus of said determination, i.e. number, type and field of events being tracked, may easily be adjusted according to client needs, and may be modified by input from the client, the fraud service provider and/or the system itself, providing an adaptive system. Thus, a flexible determination may be provided.

In a preferred embodiment of the method according to the invention, the step of determining comprises applying a predetermined rule set onto said information. Thus, client and/or fraud system provider are able to create, regulate, expand, and control the use of the information provided for the method and system in a way that may be easily implemented in a computer program structure. The use of weights and other analyzing tools known to the skilled person may also be applied. The predetermined rule set may thus be changing over time and in accordance to client needs and the type of fraud indication service provided.

Alternatively or as a supplement the step of determining comprises applying a predetermined predictive model onto said information. Thus, not only are events and data combined to predict the possibility of fraud, the complexity inherent to the predictive model is not detrimental to the prediction speed of the inventive system and method, because the calculations and determinations based thereupon may be performed progressively by the method and system according to the invention.

In a further embodiment of the method according to the invention, the step of determining comprises applying one or more cross references onto said information. Accordingly, the events tracked and other information retrieved may then be interrelated and correlated, which further improves the fraud risk potential determination, providing further flexibility and reliability.

In another embodiment of the method according to the invention, the step of determining comprises comparing a set of recently tracked events with an event pattern history, i.e. a predetermined selection of previously tracked event sets and their corresponding resulting fraud risk potential, respectively, and if there are one or more positive matches, reducing or increasing the fraud risk potential 180 by multiplying with each corresponding resulting fraud risk potential. Accordingly, a event history inventory may be provided, e.g. by storing the more significant event histories, either for indicating positive fraud or the opposite, manually or automatically, which improves and supplements said determination.

In a further embodiment of the method according to the invention, it further comprises the step of displaying said at least one fraud risk potential, for example to said client. In order to make a qualified determination of possible fraud, the fraud risk potential is made available to an analyst, which analyst may be provided by the fraud system provider or the client. The fraud risk potential may be displayed continuously, or at certain predetermined moments before, during and after the sale process, or even at a client specified time, e.g. providing a summary of all customers or payments and their associated fraud risk potential or the like. The fraud risk potential or potentials may be displayed via a separate or the same website, or via a separate link, or in other ways, such as by e-mail or SMS-message.

In yet another embodiment of the method according to the invention, the step of providing information comprises tracking customer induced events within a predetermined time interval. Thus, the fraud determination method and system is available in client and/or system provider selected time intervals, e.g. only during daytime in the clients country for a client reaction to fraud to be timely, or only when the customer is present on the website, thus system use time may be reduced leading to increased client satisfaction with the available fraud determination service, and increased possibility of using system time elsewhere.

In another preferred embodiment of the method according to the invention, said predetermined time interval lies between a first moment, when said customer is entering said at least one website and a second moment, when a transaction has been authorized. Thus, all stages of a specific sale may be surveyed, and a multitude of events may be tracked, such as customer behaviour before, during, and after being on the website, e.g. by tracking the event "customer reads the merchant's e-mail receipt" confirming the sale.

In a further embodiment of the method according to the invention, said predetermined time interval lies between a first moment, when said customer is entering said at least one website and a second moment, when said customer is leaving said at least one website again. Thus, the customer induced events are the actions performed by the customer on or around said website, which may be advantageous in localities, where regulation dictates privacy laws, which reduces the possibility of surveying or tracking customer behaviour by the method according to the invention.

In another embodiment of the method according to the invention, the client is a merchant, which provides said at least one website for offering a customer services and/or products in a direct sale. Alternatively, clients may be an organisation, who provides a website for donating charity, or a financial institution providing a possibility of transferring funds, or the like. The term "payment" are thus not to be conceived as a payment in order to receive a web-based virtual or real product or service in the normal sense of the term, but comprises the acts of the customer ordering a funds transaction and the merchant receiving the validation thereof.

In a preferred embodiment of the method according to the invention said client is providing a payment solution for said at least one website. Thus, in the case where the functions of the payment per se have been outsourced to a payment solution provider, such as a financial institution like a bank, a credit card provider, or a loan agency, or such as a private company acting as the third-party risk taker, and/or as the connection between financial institution and merchant, the method and system according to the invention is provided, e.g. as an add-on for the payment solution providers websites or indeed for the websites, which these payment solutions providers are servicing. Thus an increased number of websites may be surveyed at any one time, and synergy effects may be taken advantage of, such as increasing the number of event pattern histories available, which provides an increased statistical basis, which further increases the reliability of the fraud risk potential determination. This increases the need for computer processing power, but this is already a requirement today for such providers, and is to be solved by a simple increase in computer power as it is known to the skilled person.

In a preferred embodiment of the method according to the invention, it further comprises the step of providing at least an indication of positive fraud, i.e. the identification of a fraudulent customer, if said at least one fraud risk potential passes a predetermined threshold. Thus, a human or computer-implemented analyst is not necessary, and is integrally provided. Accordingly, clients may be advised only or as a supplement in the case of a positive fraud situation, and by the same or a separate website, a direct computer line, an e-mail or SMS-message or the like. A display of all or some of the fraud risk potentials being determined may also be provided, or alternatively, none are provided, i.e. only positive fraud indications are provided. This reduces the time spent by the client for extracting reliable fraud indications from the fraud indication system 100.

In yet another embodiment of the method according to the invention said at least one fraud risk potential is providing a binary indication, either positive or negative fraud, such as 1 or 0. Thus, a simple, yet effective indication is provided, either the customer actions indicate he is committing any type of fraud, or they indicate he is not. The above mentioned threshold is thus 1.

In a further embodiment of the method according to the invention said at least one fraud risk potential is divided into levels between predetermined values, such as between 0 and 9. The number and gradations of levels being used are not important, but a graded potential leaves the possibility of providing a further graded fraud indication, such as providing e.g. red, yellow, green areas, i.e. fraud highly likely, less likely and not likely. Many other gradations may be used, all which may be conceived by the skilled person. The above mentioned threshold may thus be determined according to application or client desire.

In a preferred embodiment of the method according to the invention, at least part of the system events, calendar events, data concerning the payment, the predetermined rule set, and/or cross-references are provided by the client. Thus, these data change according to client needs, and the fraud indication is substantiated by the client communicating or entering in such new or modified data. Accordingly, a flexible determination is provided, since these data may be created, modified, and improved iteratively manually or automatically, e.g. also based on the information being gathered by the method and system according to the invention, and the information provided by the client, both by behaviour on the website and by entering transaction and personal data. Said means for providing client data may be a computer program for performing the method according to the invention running on the client's server or web server, which program is in communication with the fraud system provider's server or web server.

In a further embodiment of the method according to the invention, said at least one website is provided on the Internet. This is an advantage, as the Internet has now becoming accessible to many customers through the use of many different interfaces, such as home or work based computers, mobile phones, PDA's, touch screen applications in home appliances etc. Alternatives are websites on an Intranet, or on other types of LAN's or WAN's.

In a further embodiment of the method according to the invention, a first fraud risk potential is determined in order to indicate fraud in relation to a specific transaction using transaction identification. Thus the fraud indication is transaction specific, and indicates customer fraud in relation thereto. Alternatively, other types of fraud risk potentials are conceivable, such as customer fraud in relation to several different clients collectively, e.g. one customer being committing bank fraud by switching assets between banks on their websites, or such as affiliate fraud in relation to an affiliate of the client. Thus, different types of fraud risk potentials may be determined which expands the power and width of the system and method according to the invention.

In an alternative embodiment, a second fraud risk potential is determined in order to indicate fraud in relation to a specific customer using customer identification. Thus, the fraud indication is related to the customer by using a customer ID, e.g. a customer identifying ID-number provided in a cookie, or the customer entering a customer unique code before entry to the website in question, or the like, as is known to the skilled person.

In a further embodiment of the system according to the invention, the system is provided substantially as part of or in connection with said client's website or websites, for example in the web server for said at least one website. Thus, the client is also the fraud system administrator and this provides the opportunity to adapt the system for a consistent fraud determination, and all updating and parameter input is controlled and maintained by the merchant himself, keeping down system maintenance costs.

In a preferred embodiment of the system according to the invention, the system is provided substantially as part of or in connection with a web server being provided by a fraud system provider. Where this provider is an entity external to the client, maintenance, storage, processing, updating etc. are alleviated for the client. In addition, centralization of the fraud detection process allows multiple clients to pool information resources, thereby enhancing the reliability of the indication of fraudulent customers.

In a further embodiment of the system according to the invention, the system is provided entirely externally to the merchant's at least one website and in communication with it. The fraud system provider is thus allowed full control over the two parts of the system and it is not necessary for the client to perform neither maintenance nor event tracking for a reliable fraud indication. The system may be provided as a "black box" service, for example, by the external fraud system provider, which eases the maintaining and developing of the system for the fraud system provider, but requires a well established communication with the client for responding to client needs and requirements for the system.

It will be appreciated, that the system and method disclosed herein relate to alternate divisions of the systems components between the client and the external fraud processing entity and that every possible combination is contemplated no matter how the division of the system component parts and method steps are made.

In the following the invention is described in more detail with reference to the accompanying schematic drawings, in which:
- Fig. 1: is an overview illustrating of how known systems for indicating fraud in relation to network based sales have focused upon the transaction process *per se*;
- Fig. 2: is an overview of how a system according to the invention for determining fraud in relation to network based sales is able to focus upon the entire sales process;
- Fig. 3: is a overview of a preferred embodiment of a system according to the invention being applied to a merchant's website; and
- Fig. 4: is a view of a time line indicating tracking of customer activity on a website according to one embodiment of the method according to the present invention.

Behaviour analysis for the sales process is known in relation to sales in the real world. US 2005/102183 describes a monitoring system and method for the brick-and-mortar world, which based on information prior to the point of sale about a shoppers location and behaviour prior to approaching the check-out counter is used at the point of sale for comparing a list of acquired items with a list of purchased items. However, this system does not solve the above mentioned problem on the network, because this action is irrelevant for a web based system and thus this system and method are not applicable. Further, this also is applied at the moment of transaction, reducing the scope and time period for affirmative action.

Within different types of risk based industry, such as the insurance industry, it is known to perform risk analysis such as event sequence studies by providing time lines over different significant events in order for analysts to identify fraudulent customers. However, as far as the applicant is aware, this approach has not until now been applied when analyzing for fraud during sales on the Internet.

As is shown in fig. 2, the method and system according to the present invention is able to provide a reliable identification of website customers, which are likely be fraudulent, during all phases of the sales process, which identification method and system will be explained further below.

In the following, a merchant may be a provider or seller of goods or services on a website or the like interactive promotional activity, such as an e-mail or SMS promotional and sales activity, to which the customer is looking to acquire these products or services. A merchant may also be a financial institution, such as a bank or card provider. A customer is a visitor on the website in question, i.e. a potential or actual physical or virtual buyer of the service/product, which customer may be another merchant or even an automated system or application performing fraudulent acts on the website, such as an application for using a stolen credit card number for purchases as fast as possible on as many sites as possible. In the following, a client means a client to whom the service of indicating possible fraud for a web based sale is provided, the client often being a merchant selling products or service or alternatively an organisation, who provides a website for donating charity, or a financial institution providing a possibility of transferring funds, or the like. In a preferred embodiment, said client is a provider of a payment solution for said at least one website. The client may further be a website provider of one or more merchant's website or -sites. Further, there may be more than one client for each fraud indication at a time, e.g. fraud may be indicated to the payment solution provider and the merchant, who the payment solution provider is servicing, or alternatively, the fraud indication is provided to a predetermined group of merchants, whom the payment solution provider is servicing.

The term "payment" is thus not to be conceived as a payment for a virtual or real product or service in the normal sense of the word, but comprises all or part of the acts being performed, when the customer is ordering a funds transaction for the merchant to receive the validation thereof.

The term "tracking an event" is intended to mean to collect and record type and e.g. duration of event, possibly including a time indication, such as time of day, and/or at least beginning and/or end of the duration, where an event is a an occurrence in a particular place, e.g. on a website or in an email system, during a particular time interval. Further data concerning the event may also be recorded during tracking, which data are depending on the event being tracked and may comprise e.g. a unique ID number for customer and/or purchase in question, system condition data, etc.

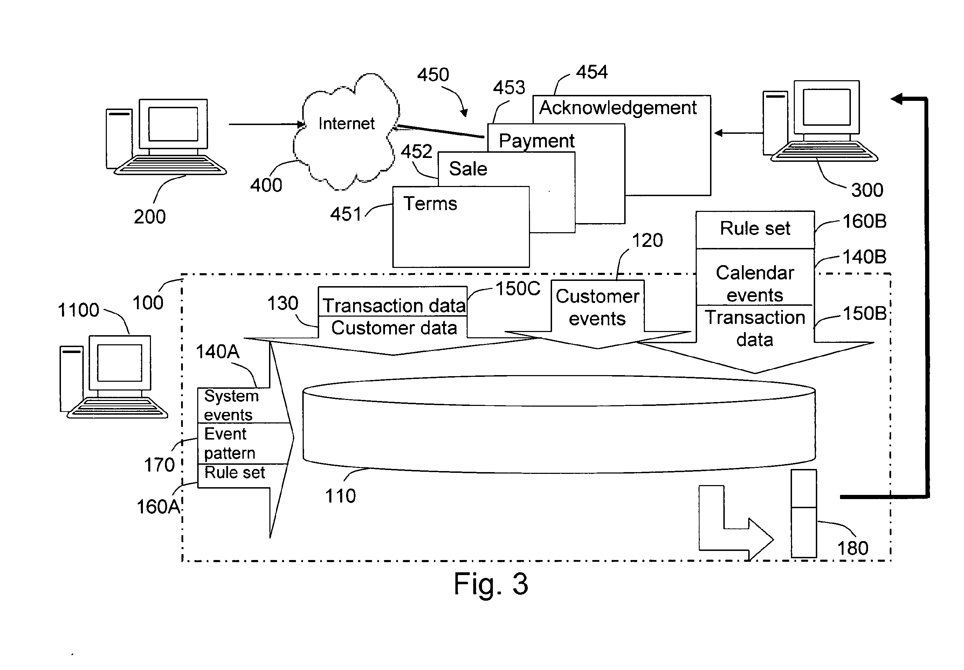

In fig. 3 is shown an overview of a computer-implemented system 100 according to one embodiment of the invention. Generally, the system 100 is consisting of two parts, a data tracking part (indicated by wide arrows) provided integrally within or in relation to a merchant's website 450, which part is providing data for a data analysis part 110, which part is provided as a service from e.g. a fraud indication service provider 1100. Obviously, other embodiments are conceivable, in which the entire system is tracking and analyzing on and for one specific merchant's website, or where data is collected and analyzed externally from said website by said service provider, or intermediate solutions thereof.

Said fraud indication service provider 1100 is applying his part 110 of the system 100 as a computer implemented service to a merchant or client 300 in order to analyze for and determine fraud risk in connection with the customer performing a network based purchase on said merchant's website 450. The service provider 1100 is using a server to implement the system 100, e.g. using a web server for providing a fraud indication website *per se*, which is accessible only to those merchants, which e.g. subscribes or in other ways are paying for this service.

As shown in fig. 3, the system 100 comprises means 105 for providing information concerning the behaviour of a customer 200 by tracking customer induced events 120 over time on or in relation to a given website 450 being provided by a merchant 300 on the Internet 400. "On or in relation to" is to mean that sales activities, which are not directly performed upon the website 450, may also be tracked by the system 100, such as the registration of an e-mail confirmation of the sale has been read by the customer 200, or the registration of a telephone call made by the customer 200, e.g. asking about the time of arrival of the product/service, or the like.

Said means for tracking and reporting of the system 100 of customer induced events 120 on the website 450 may be provided and applied in different ways known to the skilled person. For example, the events may be recorded and sent via a HTTPS, i.e. a secure website connection to the fraud indication service provider 1100 by means of a XML-document, e.g. in HTML code. Alternatively or as a supplement, a predetermined developed Application Programming Interface (API) is installed on the client's web server, and the client sets up and configures his website pages 451 - 454 accordingly. This helps the client in installing and adapting the tracking of customer induced events to his particular needs and the website at hand, and relieves the effort needed to be performed by the API application developer, i.e. the fraud indication service provider 1100. This also allows for a local tracking being performed in conjunction with the website *per se*, and for said website code to transmit individual or batches of customer events having been tracked by said website to the service provider for an analysis being performed there.

As seen in fig. 3, the customer 200 is presented with a website 450 on the Internet 400 when e.g. using a web browser on his or her computer and providing the merchant's web address to said browser. The website 450 is provided by a merchant 300, who maintains and runs it via a web server, which site 450 contains four web pages: Terms 451, Sales 452, Payment 453, and Acknowledgement 454. It is to be noted, that the website or websites being surveyed by the system 100 may be provided in many different ways, e.g. not comprising any of these types of pages, but instead a single page or a multitude of interrelated or linked websites, or any conceivable collection of pages and functionalities provided therein.

The position and extent of said event tracking means may be decided by the application in question, and may be selected, maintained and adapted accordingly over time by the merchant or client 300 and/or the fraud indication service provider 1100.

For example, one event being tracked, i.e. surveyed and recorded, by means of customer event tracking may be the fact that the customer is opening the Terms page 451 and the duration thereof, e.g. in combination with the event of the customer reopening the Terms page 451, which may indicate a serious and non-fraudulent customer 200. The position surveyed on the website page Sales 452 or trigger to track an event by the system 100 may be to track total number of times, the customer 200 has selected by clicking one or more specific product items, e.g. over a specific time interval or in total. Type and number of product item selected, and time interval between selections of said specific product items may be registered and sent e.g. in batches to the fraud indication service provider 1100.

Other examples of customer induced events 120, which may be tracked, are the following, where the list is not to be perceived as being comprehensive, and further examples are provided below: The customer 200 has
- entered the website page containing the refund policy
- visited the same website more than one week ago
- entered the credit card number incorrectly
- spent more than three minutes on the payment website page
- read the merchant's e-mail receipt
- contacted the merchant's sales support department.

Further, the system 100 comprises means for providing further information concerning the payment itself, e.g. personal customer data 130 provided by the customer 200, and transaction data 150C, 150B provided by the customer 200 and/or merchant 300, respectively, and concerning merchant and/or service provider predetermined environment events such as system events 140A, e.g. down times for the website or for the fraud indication system, and calendar events 140B, such as Christmas time or promoted sales, which increases the number of items purchased in each sale and in total sales.

Information concerning the payment itself is in fact optional, as mentioned above, and may comprise data such as a unique sale ID number, total amount of sale, customer IP address, customer name and postal address for shipping, credit card type and number being entered, and the like, as is known to the skilled person. These data may be supplied by tracking what the customer 200 is entering into the website 450, e.g. on webpage Payment 453, or alternatively or as a supplement be supplied from the merchant's own payment registry (not shown) of each sale, which registry may be in communication with the website 450. Accordingly, in addition to the tracking, a check of these data may be supplied to increase the reliability of the fraud indication, and may provide a basis for a wider selection of events which may be tracked, see above.

Data concerning type and duration of system events 140A may generally be provided by the system manager, i.e. the fraud system provider 1100, but the system events may alternatively or as a supplement be provided by the client 300, if the client is administering all or part of the fraud indication system 100. These system events 140A may for example comprise the duration and time of scheduled updates of the system 100, time periods of merchant's opening hours, periods of expected high or low activities originating from different countries, etc. By providing the system 100 with information concerning system events the determination of the fraud risk potential may be made independent of e.g. system down times.

Data concerning type and duration of calendar events 140B may be provided by the client, i.e. the merchant 300, but may alternatively or as a supplement be provided by the system provider 1100, or inherently as variables or constants in the computer program product. These calendar events may for example comprise expected high sales periods, or low sales periods, or periods in which certain items are known to be sold out or the like. By providing the system 100 with calendar events 140B, the resulting reliability of the fraud risk potential may be increased, and thus the risk of indicating fraud erroneously is decreased. The calendar events 140B may be automatically or manually provided by the merchant 300 to the service provider 1100 upon entry into the system by a simple indication or entry on the fraud indication website of the service provider 1100, or by any other means, such a telephone, mail, SMS-message or the like.

Further, cross references of different types may be used between the different types of data in the system 100 concerning events, e.g. to simultaneous or earlier tracked data concerning the customer or the sale, for example comprising e.g. registration of a change in IP-address, change of country, shorter or longer absences from the website, number of non-concluded sales etc. For the skilled person, about 10-20 different types of very effective cross references are known, and other may be conceived, based on type and amount of the tracked data supplied by the system 100. This provides a wider selection by providing event combinations, based on which the system 100 is able to identify fraudulent customers.

Then, on the basis of the different information 120, 130, 140A, 140B, 150B, 150C, or system provided information an analysis is performed by the system 100 for determining a fraud risk potential 180 in order to identify fraudulent customers. The fraud risk potential determination may be performed in different ways. Preferably, a timeline event sequence analysis comprising rule sets is applied to the events registered by the system 100, previous customer behavioural history, cross references, and optionally checks on payment details. However, as mentioned initially, other analysis methods known to the skilled person are available, such as applying rule sets exclusively, and/or predictive modelling, and/or and the like.

The recorded events and input data may be entered into a time line for an event sequence analysis and used with a predetermined and/or adaptive rule set, e.g. by assigning weights to each event or combination of events, which have taken place. Another alternative or supplement is to use predictive modelling schemes which may provide a fraud risk potential even before the customer has performed a clearly fraudulent act. Events may be assigned different weights in the system. The rule set comprising the rule that a specific event is e.g. indicating positive fraud in all circumstances, another that a (later) event indicates no fraud at all.

The predetermined analysis, using e.g. rule sets and/or predictive modelling may be provided as a default in the system, e.g. as part of the computer program product implementing the method according to the invention, or may be created and/or changed according to specific customer needs and payment experience, and may be created/changed by input provided by the fraud system provider 1100 and/or the client 300.

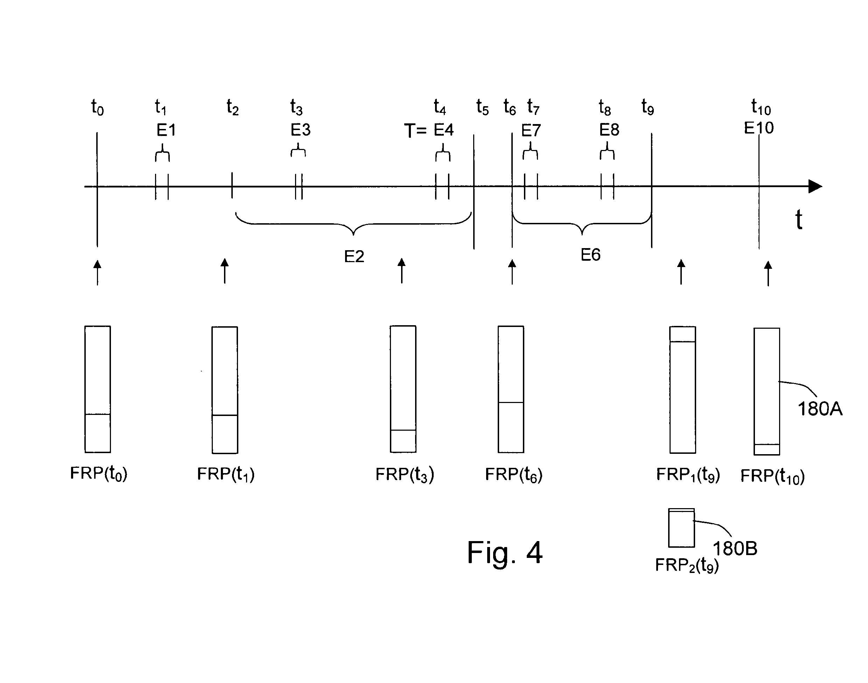

In order to illustrate a preferred embodiment of the method and system for use in relation to an event sequence analysis, a time line as shown in fig. 4 which will be described in further detail below, is set up concerning a given, e.g. new customer's behaviour by a series of tracked events for an event sequence analysis. The analysis comprises comparing recently tracked events with an event pattern history 180 while applying rule sets comprising weights to some or all events and cross references therebetween. By having access to event pattern histories, i.e. a predetermined selection of previously tracked event sets, each indicating a corresponding probability of a fraudulent act or resulting fraud risk potential, the system 100 is provided with further information as to whether a customer is real or fraudulent. Said event pattern histories may for example be provided from one or more clients, and/or from the fraud indication service provider 1100 on the basis of events from one or more merchants websites. A series of events tracked from said new customer may match one or more of these patterns, and each such pattern being matched increases or decreases by the corresponding resulting fraud risk potential. The event pattern histories may be predetermined by an automatic process within the system defined by the client/and or service provider, or manually by the client and/or service provider, e.g. based on weekly, monthly and/or yearly experiences.

In a preferred embodiment, the fraud risk potential 180 is time variable, i.e. it varies over time as a consequence of it being determined by analysis one or more times, e.g. substantially continually or intermittently over a given time interval. The fraud risk potential 180 may be determined continually or at least one or several predetermined moments in time, as is shown in fig. 4. These moments in time may be right before or after authorizing a credit card, or it may be before the merchant has sent or shipped the service or product, respectively. A continually provided fraud risk potential is an advantage, for example when the system 100 is provided entirely within the client's web server, or when being in continual communication with the client's and/or the service provider's web server or server in order continually monitor the customer or customers visiting the website. An intermittently provided fraud risk potential is an advantage for example, when e.g. the analyzing part of the system 100 resides externally from the client's web server or server, in which case the fraud risk potential and/or the positive or negative identification of a fraudulent customer is provided intermittently based on batches of system provided information from the tracking part of the system 100.

The resulting fraud risk potential 180 is a combined value to be regarded as representing the probability of fraud. It 180 may take different forms, depending on preference of the client or provider of the website in question and the application of the system 100. In fig. 3 and 4, it is shown that the potential 180 is graded into several levels, presented as having ten different levels, e.g. from level 0 to level 9, indicating low fraud probability and high fraud probability, respectively. The potential may alternatively be provided with only two levels (not shown), i.e. binary, indicating fraud or no fraud, respectively. Other ways of presenting the risk fraud potential are known to the skilled person, e.g. with a red, yellow, and green zone (not shown), indicating high, medium and low probability, respectively, and depends on preference of the client or provider of the website in question, and the application of the inventive system, which provides the system 100 with flexibility of display and the possibility of evaluation differentiation.

If the resulting fraud risk potential 180 is determined at a level above a predetermined threshold, an indication of positive fraud or identification of a fraudulent customer, is communicated (indicated in the right hand side of fig. 3 by the broad dark arrow) to a client, this being the merchant 300, which provides the website 450 to be monitored for fraud. He is a client of the fraud system provider 1100, which delivers a service consisting of the results from the fraud indication system 100, i.e. the displaying of the fraud risk potential 180 for each of the presently logged on customers, and an alarm indication and customer identification if one of these fraud risk potentials 180 is exceeding a predetermined threshold value. These results, which may comprise relevant check and alert information, and may comprise one or more positive fraud indications, one or more fraud risk potentials of different types and for different customers, customer ID's, transaction ID's, payment amount, etc., and combinations thereof, may preferably be sent to the client subscribing or paying for the fraud service provided. There are many ways in which these results may be sent to the client, comprising a client accessible web page, e.g. using a code or password, or by displaying the results in the merchant's website to be fraud tracked, or by a communication line to the client web server or computer network, or sending an e-mail or an SMS or the like to the merchant's sales department, or similar way known to the skilled person.

The fraud risk potential or the indication of positive fraud, i.e. the identification of a fraudulent customer may be communicated in different ways, either as reactions to a client query to the service provider or as an automatically timed or positive fraud indication induced reminder sent from the fraud indication system 100 to the client. Preferable examples hereof are the client part of the system queries the provider part of the system before or during the customers credit card is being authorized, i.e. before the transaction is being settled, or the provider part of the system reminds the client part of the system after the transaction is settled. In the first two cases, the customer may after being identified by the system as a potentially fraudulent individual, be rejected by the website in order to hinder a charge-back. In the latter case, the merchant must perform a refund of the customer in order to prevent a charge-back. In all cases, the fraud risk potential determination may after such specific point in time, based on subsequent tracked events, alter accordingly.

Thus, the client is equipped with information to hinder, or ultimately invalidate a transaction, sometimes even before it has been initiated, or at least during or after the transaction has been sent to a transaction authorisation, or alternatively after the transaction has been authorized, but before the product/service has been shipped. The system and method of the present invention, and the computer program on a storage medium for providing the code, which when run is employing it thereto, is unique in that it is able to provide the fraud indication information at every stage in the sales process. As far as is known to the applicant, no other web based system or method uses customer behaviour analysis applicable to all stages of the sales process, e.g. in particular before a transaction is initiated or after the sale has been consummated.

The system 100 may be implemented in different ways. In a first option, as described above in relation to fig. 3, part of the system 100 resides within a fraud indication system provider's 1100 computer, e.g. being a web server, continually collecting data from one or more websites 450 of one or more merchants concerning the behaviour of one or more customers etc., and part of the system resides within the web server of each individual merchant 300, e.g. providing data concerning customer e-mails received, confirmation e-mails sent, and e-mail receipts resulting from these sent e-mails by said merchant web server.

The second option is that the system may be provided as computer implemented code implemented in communication with or directly on the web server of the client 300, i.e. operable entirely within the client's or merchant's web server. In this case updated data such as a new or updated rule set, input of future system or calendar events and the like, may be provided by the client 300 himself and/or the fraud system provider 1100. This option is advantageous, where the system is operable entirely within e.g. the client's or merchant's web server, or the fraud indication system provider's web server, in the latter case only if it is the same web server as the client's or merchant website is provided within.

The third option is to provide the system substantially entirely within the fraud indication system provider 1100's server, i.e. externally from the clients web server. The system may for example be residing as an executable program on a web server, where also the fraud risk potential 180 is determined and displayed, and where only positive fraud is communicated to the client, optionally together with information identifying either the customer or the transaction which was deemed fraudulent. However, this may reduce the number of customer induced events, which are trackable by the system.

In a preferred embodiment of the system and method, the fraud indication system is an add-on application to a conventional payment site, e.g. as is provided for and/or by a payment provider such as the Danish company DIBS by their Internet based payment solutions. Accordingly, the client is the payment provider, and the fraud indication is displayed to this client and reacted to by him on behalf of one or more merchants on whose behalf he is providing the transaction authorisation, e.g. by installing the tracking part of the system upon all the merchant's websites being serviced. The fraud indication according to the present invention may then advantageously be done independently from and in relation to with the transaction authorisation for each individual transaction.

Further, a system and method is provided with the ability to handle information from more than one website at a time, either from the same client or merchant or from different clients or merchants.

In fig. 4, the system and method according to the invention is illustrated by the use of a time line, e.g. for use with an event sequence analysis, which by using crossing lines is indicating customer behaviour induced events E1, E2, E3, E4, E5, E6, E7, E8, E9, E10 originating from one customer in relation to a clients website 450, which provides direct sale and which is being tracked by said system and method.

Briefly described, the time line indicates the tracking of a number of said events over time before, during, and after e.g. a transaction T in relation to a payment performed by said customer on the website on the Internet. These discrete events are transmitted to said fraud system provider 1100's server by surveying the merchant 300's website 450 as described above. When desired by the client of the fraud system provider 1100, the system determines and displays a fraud risk potential, FRP (t₀) - FRP(t₁₀), i.e. an indication of the probability of fraud, based on these events and optionally also on data relating to the payment and the like, as described above.

At a point in time t₀, a potential customer 200, by clicking to agree to the terms and conditions of a commercial merchant website being surveyed by the present fraud determination and indication system, is entering into an active tracking mode of the inventive system 100 in use for said website 450, e.g. a website selling telephone cards and services. This starts the predetermined tracking time interval. In the terms and conditions it may be pointed out, that such tracking and fraud indication system is being accepted to by accepting the terms for entering the website. When the customer is agreeing to the terms and conditions, this is event E₀. The time and events taking place is continually being logged by the fraud indication system according to the invention, in order to based on the given rule set to determine a time variable fraud risk potential FRP. As shown in fig. 4, the time variable fraud risk potential FRP(t₀) is set to a default low level indication, as indicated with a line, because the customer entering the website is new, i.e. is not previously known to the system. The identification of the customer 200 as performed by the system may be applied in different ways known to the skilled person, e.g. the customer being provided with an ID-cookie, or registration of his computer's IP-address. This may also be agreed upon by customer acceptance of e.g. a terms agreement before entering the merchant's website.

Alternatively, different predetermined time intervals may be chosen, which are suitable for the application for which the fraud system is used. One example is a continuous or intermittent surveying of customers entering and exiting the website, another is a continuous surveying of a potentially fraudulent customer, e.g. over a collection of different websites being serviced by the same or different fraud system providers 1100. Other time intervals may be decided upon according to client specification and fraud system performance and availabilities.

At a point in time t₁, see fig. 4, the customer initiates a purchase in event E₁ by clicking on a displayed item for sale, e.g. one hundred more SMS-messages to be downloaded at his mobile telephone number. The click at t₁ and the item chosen is recorded by the system when tracking customer behaviour. The determined level of the time variable fraud risk potential FRP(t₁) may be depending upon the time period t₀ - t₁, and the type and number of item chosen, and also on the rule set being applied at that moment in time, and for that specific website.

Afterwards, during a period t₂ - t₄ in event E₂, see fig. 4, the customer is entering in his or her transaction details for payment for downloading the selected one hundred SMS-messages. During this period, at the point in time t₃, in event E₃ the customer enters in a credit card number for payment of the one hundred SMS-messages, which is recorded by the system as data concerning the payment. At t = t₄ and event E₄, the customer enters in an e-mail address for contact and a validation of the transaction for concluding the payment is performed. At t = t₅ and event E₅, the customer leaves the website in question.

Shortly afterwards, at t = t₆ and event E₆, the same customer re-enters the same website, at t = t₇ and in event E₇ he again clicks to purchase one hundred SMS-messages. The customer is identified by the system as the same person, who entered a short while ago, e.g. by being assigned a customer ID or by his IP-address, as explained above. At t = tg and event E₈, he enters a different credit card number from the one used at event E₃, and at t = t₉ and event E₉, the fraud indication system indicates to the client, i.e. the telephone card provider, that the customer is highly likely to be fraudulent, e.g. by sending an indication to the client webserver. This automatically halts the sale and informs the customer of the action being taken, for example also politely and informatively indicating the reason therefore. This indication may alternatively be transmitted by the merchant's sale department following the halt of the sales process, or before shipping the item to the customer, i.e. before downloading to the customer's mobile phone the possibility of sending one hundred extra SMS-messages, as described above.

At t = t₁₀ and event E₁₀, the customer sends an e-mail to the website contact address and explains, that the credit card number used for the last transaction was typed in with an error in it, and the website fraud indication system is able, based on website merchant feedback, to reduce the transaction first fraud risk potential FRP(t₁₀) to a low level, and thus restart or resume the sale by allowing the customer back upon the website.

As was indicated above, more than one website may be tracked using the method and system according to the present invention. This is in particular advantageous in the case where the client is a payment service provider or for the fraud system provider, which may then e.g. be able to correlate information between the websites and thus provide a more reliable fraud risk indication.

More than one fraud risk potential, FRP₁(t₉), FRP₂(t₉), 180A and 180B respectively in Fig. 4 may be determined, and indicated to one or more clients of the fraud tracking system at the same or different moments in time.

This may be a first potential FRP₁(t₉) 180A for indicating fraud risk in relation to and corresponding to the financial transaction in question, e.g. after event E6. Accordingly, a high risk of customer fraud may be indicated based on among others the event of the same customer using different card numbers to purchase items. Further, a second potential FRP₂(t₉) 180B may be determined for indicating fraud risk in relation to the customer in question, e.g. there may be a high risk that the customer is sending spam SMS-messages. This may be indicated, based on among others the fact that e.g. he was attempting to purchase one hundred SMS-messages for the same phone number within the relatively short time period t₀ - t₉.

The application of the invention is in particular the partaking of a network based commercial sale, in particular payment for client products or services, e.g. in a direct sale, and/or payment of bills via the Internet, e.g. via a payment solution provider. However, it is well within the scope of the present invention to utilize the inventive system and method for other network based applications, such as traditional catalogue/telephone ordering, telephone usage environments, telephone sales and marketing, and even traditional sales between physical entities, in which interactive communication means such as a website is available. The means for accessing such website is not substantial to the invention, and may comprise a personal computer, a touch-screen application, a mobile phone, a PDA, etc.

It is to be understood, that the present invention may be implemented utilizing any number of computer technologies. For example, although the present embodiments are disclosed as operable in connection with the Internet, the present invention may be utilized over any computer network, including for example a wide area network or a local area network. Similarly, the customer computer and/or client or merchant computer may be any computer device which can be coupled to the network, including for example PDA's, web-enabled cellular telephones, hard-wired telephones which dial into the network, mobile and stationary computers, Internet appliances, and the like. Furthermore, the merchant servers providing the websites to be fraud tracked may be of any type, running any software, and the software modules, objects and plug-ins described herein may be written in any programming language, including HTML language. Lastly, the database and storage devices described herein may utilize any storage technology, including for example local computer memory, network attached storage, both fixed and removable, in any known storage medium, such as magnetic or optical.

## Claims

1. A computer-implemented method for identifying potentially fraudulent customers in relation to network based commerce activities, in particular involving payment, associated with at least one client website (450) comprising the following steps:
- providing information at least concerning said customers behaviour over time in relation to said at least one website (450) by tracking at least one customer induced event (120); and
- determining at least one fraud risk potential (180) based on said information in order to identify potentially fraudulent customers.

2. A method according to claim 1, wherein said at least one fraud risk potential is determined substantially continually, i.e. at least after each customer induced event (120) in relation to said at least one website (450), thereby providing at least one substantially time variable continuous fraud risk potential (180).

3. A method according to claim 1, wherein said at least one fraud risk potential is determined intermittently after tracking said at least one customer induced event (120) in relation to said at least one website (450), thereby providing at least one substantially time variable intermittent fraud risk potential (180).

4. A method according to any of the preceding claims, wherein said at least one fraud risk potential (180) is determined at least right before a transaction for a payment is authorized.

5. A method according to any of the preceding claims, wherein said at least one fraud risk potential (180) is determined at least right after a transaction for a payment is authorized.

6. A method according to claim 1 or 2, wherein said information further comprises environment induced events, comprising system (140A) and/or calendar induced events (140B).

7. A method according to any of the preceding claims, wherein said information further comprises data concerning the payment, comprising transaction data (150C) and/or customer data (130).

8. A method according to any of the preceding claims, wherein the step of determining comprises applying a timeline sequence analysis onto said information.

9. A method according to any of the preceding claims, wherein the step of determining comprises applying a predetermined rule set (160) onto said information.

10. A method according to any of the preceding claims, wherein the step of determining comprises applying a predetermined predictive model onto said information.

11. A method according to any of the preceding claims, wherein the step of determining comprises applying one or more cross references onto said information.

12. A method according to any of the preceding claims, wherein the step of determining comprises comparing a set of recently tracked events with an event pattern history, i.e. a predetermined selection of previously tracked event sets and their corresponding resulting fraud risk potential, respectively, and if there are one or more positive matches, reducing or increasing the fraud risk potential (180) by multiplying with each corresponding resulting fraud risk potential.

13. A method according to any of the preceding claims, further comprising the step of displaying said at least one fraud risk potential (180), for example to said client (300).

14. A method according to any of the preceding claims, wherein the step of providing information comprises tracking said at least one customer induced event (120) within a predetermined time interval.

15. A method according to claim 14, wherein said predetermined time interval lies between a first moment (to), when said customer (200) is entering said at least one website (450) and a second moment (t₁₀), when a transaction (T) has been authorized.

16. A method according to claim 14, wherein said predetermined time interval lies between a first moment (to) when said customer (200) is entering said at least one website (450), and a second moment (t₅) when said customer is leaving said at least one website (450) again.

17. A method according to any of the preceding claims, wherein said client (300) is a merchant, which provides said at least one website (450) for offering a customer (200) services and/or products in a direct sale.

18. A method according to any of the preceding claims, wherein said client (300) is a provider of a payment solution for said at least one website (450).

19. A method according to any of the preceding claims, further comprising the step of providing at least an indication of positive fraud, i.e. the identification of a fraudulent customer, if said at least one fraud risk potential (180) passes a predetermined threshold.

20. A method according to claim 19, wherein said at least one fraud risk potential (180) is providing a binary indication, either positive or negative fraud, such as 1 or 0.

21. A method according to claim 19, wherein said at least one fraud risk potential (180) is divided into levels between predetermined values, such as between 0 and 9.

22. A method according to any of the preceding claims, wherein at least part of the system events, calendar events, data concerning the payment, the predetermined rule set, and/or cross-references are provided by the client.

23. A method according to any of the preceding claims, wherein said at least one website is provided on the Internet.

24. A method according to any of the preceding claims, wherein a first fraud risk potential (FRP₁(t₉)) is determined in order to indicate fraud in relation to a specific transaction using transaction identification.

25. A method according to any of the preceding claims, wherein a second fraud risk potential (FRP₂(t₉)) is determined in order to indicate fraud in relation to a specific customer using customer identification.

26. A system (100) for identifying potentially fraudulent customers in relation to network based commerce activities, in particular involving payment, associated with at least one client website (450), comprising
- at least one website (450) for which an identification of potentially fraudulent customers is to be performed;
- survey means for providing information at least concerning customer behaviour over time in relation to said at least one website by tracking at least one customer induced event (120);
- process means for determining at least one fraud risk potential (180) based on said information in order to identify fraudulent customers.

27. A system according to claim 26, where said information further comprises environment induced events, comprising system (140A) and/or calendar induced events (140B).

28. A system according to claim 26 or 27, wherein said information further comprises data concerning the payment, comprising transaction data (150C) and/or customer data (130).

29. A system according to any of the claims 26 to 28, further comprising means for displaying said at least one fraud risk potential (180), for example to a client (300).

30. A system according to any of the claims 26 to 29, further comprising means for providing at least an indication of positive fraud, i.e. to identify fraudulent customers, for example to a client, if the fraud risk potential passes (180) a predetermined threshold.

31. A system according to any of the claims 26 to 30, where said at least one client website is a merchant's website for offering a customer services and/or products in a direct sale.

32. A system according to any of the claims 26 to 31, where said at least one client website is a payment solution provider's website (300) for providing a payment solution for merchant's website or websites.

33. A system according to any of the claims 26 to 32, said system (100) being provided substantially as part of or in connection with a client's website (450) or websites, for example in the web server for said at least one website.

34. A system according to any of the claims 26 to 33, said system being provided substantially as part of or in connection with a web server being provided by a fraud determination provider (1100).

35. A system according to any of the claims 26 to 34, said system being provided entirely externally to the client's at least one website (450) and in communication with it.

36. A system according to any of the claims 26 to 35, further comprising means for providing at least an indication of positive fraud to a client, if said at least one fraud risk potential passes a predetermined threshold.

37. A system according to any of the claims 26 to 36, where said at least one fraud risk potential is providing a binary indication, either positive or negative fraud, such as 1 or 0.

38. A system according to any of the claims 26 to 37, wherein said at least one fraud risk potential are divided into levels between predetermined values, such as between 0 and 9.

39. A system according to any of the claims 26 to 38, further being provided with means for providing at least part of the system events, calendar events, data concerning the payment, the predetermined rule set, and/or cross-references from the client.

40. A computer program being stored on a computer readable medium, which program is operable for performing a method according to any of the claims 1 to 25 said computer program comprising:
- code for providing information at least concerning customer behaviour over time in relation to said at least one website (450) by tracking at least one customer induced event (120); and
- code for determining said at least one fraud risk potential (180) based on said information in order to identify potentially fraudulent customers.
